# FASCICULE DE BREVET EUROPEEN

(11) **EP 1 097 573 B1**
(45) Date de publication et mention de la délivrance du brevet: **12.03.2003**
(21) Numéro de dépôt: 99932935.2
(22) Date de dépôt: 21.07.1999
(51) Int. Cl.: H04N 5/74, G03B 21/10

(54) **DISPOSITIF D'AFFICHAGE PAR RETROPROJECTION**
ANZEIGEVORRICHTUNG MITTELS RÜCKPROJEKTION
OVERHEAD PROJECTION DISPLAY DEVICE

(30) Priorité: 21.07.1998 FR 9809298
(43) Date de publication de la demande: 09.05.2001
(73) Titulaire: Atuser SARL, 92200 Neuilly sur Seine (FR)
(72) Inventeur: MULLERIS, Jean-Jacques, F-92200 Neuilly sur Seine (FR); GRENIER, Jean, F-93500 Pantin (FR); MÖRI, Jérome, F-92300 Levallois Perret (FR); SABATER, Jacques, F-91190 Gif sur Yvette (FR)
(74) Mandataire: Debay, Yves
(86) Numéro de dépôt international: FR9901788
(87) Numéro de publication internationale: WO00005879

(56) Documents cités:
- EP-A- 0 676 893
- WO-A-97/01127
- US-A- 3 728 801
- US-A- 4 875 064
- US-A- 5 580 146
- US-A- 5 741 057

## Description

La présente invention concerne un dispositif d'affichage par rétroprojection utilisant notamment, comme source d'image, un dispositif à cristaux liquides à matrice active appelé LCD.

Il est connu dans l'art antérieur des systèmes de rétroprojection utilisant notamment des dispositifs à cristaux liquides à matrice active, et des systèmes mettant en oeuvre des projections sur des écrans constitués de lentilles de Fresnel. Cependant, ces systèmes sont très volumineux et nécessitent une structure propre adaptée à leur fonctionnement.

Il est également connu par le document US 4 875 064 un dispositif de projection comprenant une boîte sensiblement parallélépipédique dans laquelle est disposée une source lumineuse, une lentille de projection pour agrandir une image créée par un écran à cristaux liquides sur un écran. Selon ce document, tous les éléments du dispositif de projection sont montés à l'intérieur et sur la boîte. Ainsi, selon ce document la mise en place du dispositif de projection nécessite la construction complète d'une nouvelle boîte ou bien l'installation longue et laborieuse des éléments optiques dans une boîte existante.

La présente invention a donc pour objet de pallier les inconvénients de l'art antérieur en proposant un dispositif d'affichage à rétroprojection adaptable à une structure existante ou conçue spécialement pour le dispositif, ne nécessitant qu'un volume réduit pour son installation tout en permettant une surface d'affichage importante par rapport à la surface de génération de l'image et ne nécessitant aucun réglage optique une fois mis en place.

Ce but est atteint par le fait que le dispositif d'affichage par rétroprojection comprend, des moyens de création d'une image, des moyens de projection de cette image sur un écran de dimensions déterminées, ces moyens de projection comprenant une pluralité de miroirs, et est caractérisé en ce que les moyens de création de l'image, les moyens de projection sur l'écran et l'écran sont disposés dans une structure auto-porteuse de volume déterminé par le volume d'un caisson sur lequel est montée la structure par l'intermédiaire de moyen de fixation, ces moyens de fixation étant indépendants du réglage ou des positions relatives des éléments portés par le caisson.

Selon une autre particularité, les moyens de création d'une image comprennent d'amont en aval, une source lumineuse, des moyens d'éclairage homogène d'un dispositif de génération d'images, l'axe optique de la source étant contenu dans un plan parallèle à la fois au plan correspondant au dessus du caisson et au plan correspondant à l'arrière du caisson, les moyens de projection de l'image comprennent au moins trois miroirs et un objectif à courte focale, dont un premier miroir est disposé entre le dispositif de génération d'images et l'objectif à courte focale pour dévier, orthogonalement et dans le plan horizontal, les rayons lumineux sur un deuxième miroir disposé en aval de l'objectif et à une distance déterminée de celui-ci, ce deuxième miroir déviant les rayons lumineux vers l'arrière du caisson et sur un troisième miroir qui dévie les rayons lumineux vers l'écran, l'axe optique de l'objectif étant contenu dans un plan horizontal et le chemin optique compris entre le premier miroir et l'écran étant contenu dans un même plan, perpendiculaire à l'écran et au dessus du caisson.

Selon une autre particularité, les moyens de création d'une image et les moyens de projection de cette image comprennent d'amont en aval, une source lumineuse, des moyens d'éclairage homogène d'un dispositif de génération d'images, l'axe optique de la source étant contenu dans un plan parallèle, à la fois au plan correspondant au dessus du caisson, et au plan correspondant à l'arrière du caisson, les moyens de projection de l'image comprennent un objectif de type rétrofocus et au moins trois miroirs, dont un premier miroir est disposé entre la source et les moyens de création d'image pour dévier, orthogonalement et dans le plan horizontal, les rayons lumineux sur un deuxième miroir disposé en aval des moyens de création d'image, ce deuxième miroir déviant les rayons lumineux dans un plan sensiblement vertical, au travers le l'objectif sur un troisième miroir qui dévie les rayons lumineux vers l'écran, l'axe optique de l'objectif étant contenu dans un plan vertical et le chemin optique compris entre le premier miroir et l'écran étant contenu dans un même plan, perpendiculaire à l'écran et au dessus du caisson.

Selon une autre particularité, le dispositif de génération d'une image comprend un écran à cristaux liquides à matrice active.

Selon une autre particularité, l'objectif est de type rétrofocus comprenant un groupe convergent de quatre lentilles, et une cinquième lentille divergente, la distance focale de l'objectif étant déterminée pour que la longueur du chemin optique entre la première lentille et le dispositif de génération d'image soit de l'ordre de 1,5 fois la distance focale.

Selon une autre particularité, les moyens de création de l'image comprennent un système de condenseur des faisceaux lumineux comprenant au moins une lentille de Fresnel.

Selon une autre particularité, les dimensions de l'image créée par le dispositif de génération de l'image sont comprises entre 9 et 10 cm de large et 13 et 15cm de longueur.

Selon une autre particularité, le caisson sur lequel est montée la structure de type profilé est, soit une structure existante, soit une structure spécialement aménagée pour le dispositif selon l'invention.

Selon une autre particularité, le rapport d'agrandissement de l'image générée par rapport à l'image projetée est d'au moins 6.

Selon une autre particularité, la surface de l'écran est dépolie et ses dimensions sont sensiblement de 80 cm de longueur et 60 cm de largeur.

Selon une autre particularité, l'écran est situé à une distance maximale de la face avant du caisson comprise entre 10 et 25 cm.

Selon une autre particularité, la forme de chaque miroir est, soit plane, soit cylindrique.

Selon une autre particularité, le volume du caisson est sensiblement un parallélépipède à base trapèze rectangle, les dimensions du trapèze rectangle étant comprises, pour la petite base entre 10 et 20 cm, pour la grande base entre 20 et 30cm, et pour le côté perpendiculaire à la petite et grande base entre 60 et 70cm, la longueur du caisson étant égale à au moins 75 cm.

D'autres particularités et avantages de la présente invention apparaîtront plus clairement à la lecture de la description ci-après faite en référence aux dessins annexés dans lesquels :
- la figure 1 représente une vue de côté d'une première variante du dispositif selon l'invention lorsqu'il est monté sur un caisson.
- la figure 2 représente une vue de dessus d'une première variante du dispositif selon l'invention.
- la figure 3 représente une vue de côté d'une deuxième variante du dispositif selon l'invention lorsqu'il est monté sur un caisson.

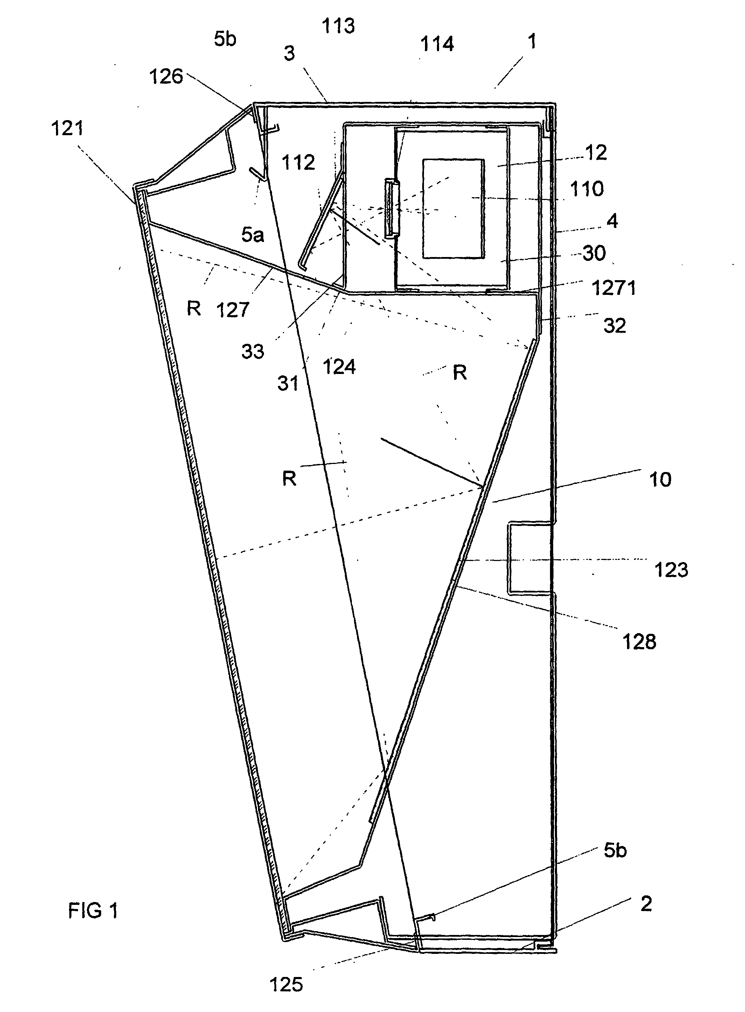

La figure 1 représente une vue de côté d'une première variante du dispositif selon l'invention lorsqu'il est monté sur un caisson. La section transversale du caisson (1) sur lequel est monté le dispositif selon l'invention est sensiblement un trapèze rectangle dont la petite base (2), correspondant au-dessous du caisson (1), mesure, par exemple, environ 15 cm, la grande base (3), correspondant au dessus du caisson (1), mesure par exemple, environ 25 cm et le côté (4) perpendiculaire à la petite (2) et grande (3) base, correspondant à l'arrière du caisson (1), mesure par exemple, environ 65cm. La longueur du caisson est par exemple, au moins égale à 75cm. Ainsi, le volume disponible pour mettre en place un système de projection d'images animées est relativement réduit. La face avant du caisson est ouverte.

Le dispositif d'affichage selon l'invention comprend essentiellement une structure (10) autoporteuse montée sur le caisson (1) et constituée de deux volumes (11, 12) de dimensions déterminées de sorte que la structure (10) s'engage dans presque sa totalité dans le volume intérieur du caisson (1).

Un premier volume (12), situé entièrement dans la partie supérieure du volume intérieur du caisson (1), est de forme sensiblement parallélépipédique. Ce premier volume (12) comprend des moyens de création d'une image (décrit ultérieurement) et des moyens (110, 112, 114) de projection de cette image sur un écran (121) contenu dans le deuxième volume (12). Ces moyens de création d'une image et ces moyens (110, 112, 114) de projection de cette image sont contenus dans un coffret (30) réalisé par exemple en tôles pliées et/ou soudées. L'axe longitudinal du coffret (33) est parallèle à la fois au dessous (3) et à l'arrière (4) du caisson. Le coffret (33) est rendu solidaire du deuxième volume (12) par l'intermédiaire d'au moins une patte (31, 32) de fixation, décrite ultérieurement. Les moyens de projection de l'image comprennent notamment un premier miroir (110) formant un angle déterminé avec l'arrière (4) du caisson (1) pour diriger dans le plan horizontal et orthogonalement, les rayons lumineux, symbolisés par les lignes (R) brisées en pointillés, issus des moyens de création de l'image, sur un deuxième miroir (112). Ce deuxième miroir (112) est situé à l'extérieur du coffret (30) et forme un angle déterminé avec une première paroi (33) du coffret, située la plus proche de l'avant du caisson (1), pour dévier les rayons lumineux vers l'arrière et sur un troisième miroir (123) compris dans le deuxième volume (12). Ainsi, le chemin optique compris entre le premier (110) et le troisième (123) miroirs est compris dans un même plan, perpendiculaire à l'écran (121) et au-dessus (3) du caisson (1). Cette disposition particulière permet de réduire l'espace nécessaire pour la mise en place du dispositif dans le caisson (1). Dans cette première variante l'angle entre le deuxième (112) et le troisième (123) miroir est faible.

Les moyens de projection de l'image comprennent également un objectif (114) monté dans le coffret (30) et situé entre le premier (110) et deuxième (112) miroirs, par exemple sur un support (1141) vertical. Avantageusement, l'objectif (114) est un objectif à courte focale pour obtenir une image de grande taille et suffisamment nette sur l'écran (121) du deuxième volume (12). Afin de positionner le deuxième miroir (112) pour qu'il forme l'angle voulu avec la première paroi (33) du coffret (30), celui-ci est monté, par exemple sur une plaque (113) solidaire du coffret (30). Afin de permettre le passage des rayons lumineux du premier miroir (110) vers le deuxième miroir (112), le coffret (30) comprend un perçage par exemple de forme rectangulaire dans la première paroi (33) du coffret (30) située la plus proche de l'avant du caisson.

La forme du deuxième volume (10) est sensiblement une pyramide à base carrée, dont la base constitue l'écran (121) du dispositif. Avantageusement, l'écran (121) est parallèle à la face avant du caisson (1), cependant il est possible de prévoir que l'écran (121) fasse un angle déterminé avec l'horizontale. L'écran (121) est, par exemple dépoli et mesure, par exemple environ 80cm de longueur, et 60 cm de largeur. L'écran (121) peut également avoir un effet de lentille de Fresnel pour accroître et rendre plus uniforme sa luminosité et améliorer la qualité de l'image projetée. Le côté supérieur (127) de la pyramide, formant le deuxième volume (12) comprend une portion horizontale (1271), située vers l'arrière du caisson (1), sur laquelle est monté le coffret (33) du premier volume (11). Avantageusement, cette portion forme également le fond du coffret (30). Afin de laisser passer les rayons lumineux déviés par le deuxième miroir (112) vers le troisième miroir (123), le côté (127) supérieur de la pyramide formant le deuxième volume (12) comprend un perçage (124) de dimensions appropriées. Le troisième miroir (123) est monté sur le côté (128) inférieur de la pyramide formant le deuxième volume (12). La valeur de l'angle formé par le troisième miroir (123) et l'écran (123) est déterminée pour que l'image finale formée sur l'écran (121) ne soit ni déformée, ni tronquée par rapport à l'image initiale et que sensiblement toute la surface de l'écran (121) soit utilisée pour projeter l'image.

Comme décrit précédemment, le premier volume comprend au moins une patte (31, 32) de fixation permettant son montage sur le deuxième volume (12). Dans la variante de réalisation représentée figure 1, le coffret (30) comprend deux pattes (31, 32) de fixation. Une première patte (31) est située sur la partie inférieure de la première paroi (33) du coffret (30), située la plus proche de la face avant du caisson (1). Cette patte est fixée sur le côté supérieur (127) de la pyramide, par exemple par soudage, vissage, collage, ou tout autre mode de fixation. La deuxième patte (32) est en fait un prolongement vers le bas d'une deuxième paroi du coffret (30) située la plus proche du fond (4) du caisson (1). Dans cette zone, le côté (128) de la pyramide portant le troisième miroir (123) est parallèle à la deuxième patte (32) pour permettre une solidarisation de la dite patte (32) avec le deuxième volume (12), par exemple par soudage, vissage, collage ou tout autre moyen de fixation. Les dimensions de la pyramide formant le deuxième volume (12) sont telles que l'écran (121) est situé à une distance maximale déterminée de la face avant du caisson (1). Cette distance est comprise entre 10 et 15 cm.

La structure (10) autoporteuse du dispositif est montée sur le caisson par l'intermédiaire de moyens (125, 126) de fixation situés dans la partie supérieure et inférieure du deuxième (12) volume au niveau de la face correspondant à la base de la pyramide formant le deuxième volume (12). Ces moyens (125, 126) de fixation sont déterminés en fonction des éléments disponibles sur le caisson (1). Par exemple, si le caisson dispose de crochets (5a), les moyens de fixation de la structure autoporteuse comprennent des crochets complémentaires (non représentés), pour assurer le montage et le soutien de la structure (10) autoporteuse. De même, si le caisson (1) dispose de rebords (5b) situés sur les parties avant du dessus (3) et du dessous (2) du caisson (1), les moyens de fixation sont alors constitués de pattes (125, 126) qui lors de montage viennent s'ajuster parallèlement aux rebords (5b) du caisson (1). Le montage de ces pattes (125, 126) est par exemple ensuite complété par des systèmes vis/écrous qui traversent à la fois chaque patte (125, 126) de la structure (10) autoporteuse et les rebords (5b) correspondant du caisson (1).

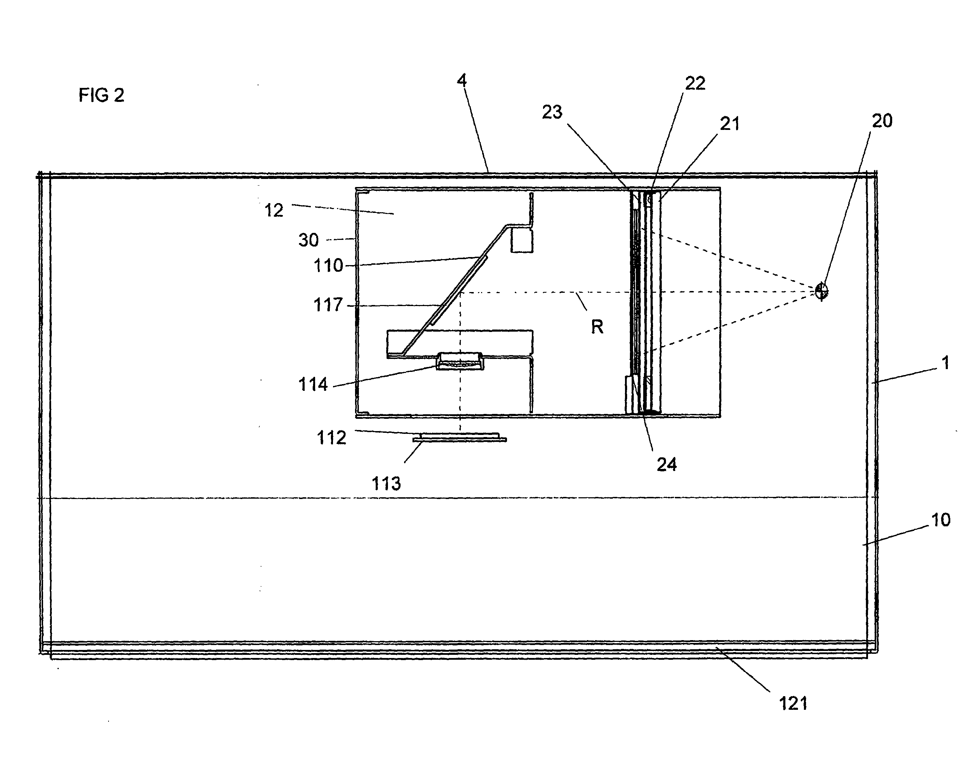

La figure 2 représente une vue de dessus de la première variante du dispositif selon l'invention. Sur cette figure, apparaît plus clairement la disposition des moyens (20, 21, 22, 23, 24) de création d'une image et des moyens (110, 112) de projection de cette image. De façon non limitative, les moyens (20, 21, 22, 23, 24) de création de l'image comprennent une source de lumière (20), de préférence de type lumière du jour, des moyens (21, 22) pour homogénéiser l'éclairage d'un dispositif (23) de génération d'images. Ces moyens pour homogénéiser l'éclairage comprennent un système (21) de condenseurs et un filtre (22) catathermique. Le dispositif de génération d'images comprend par exemple un écran (23) à cristaux liquides à matrice active de type LCD ou TFT et avantageusement un polariseur (24). Le système de condenseur comprend, par exemple, au moins une lentille de Fresnel. Les dimensions de l'écran (23) à cristaux liquides sont par exemple d'environ 9cm de largeur sur 13cm de longueur. L'écran (23) à cristaux liquides permet, par l'intermédiaire d'un système informatique (non représenté) de type connu, de visualiser une image ou une animation. Il est à la portée de l'homme de métier de substituer l'écran (23) à cristaux liquides et le polariseur (24) par un autre dispositif de génération d'images équivalent. Avantageusement l'axe optique des moyens (20, 21, 22, 23, 24) de création de l'image est sensiblement parallèle à la fois à l'arrière (4) et au dessus (3) du caisson. Les rayons lumineux de la source (20) projettent alors cette image sur le premier (110) miroir. Ce premier miroir est monté sur un deuxième support (117) solidaire du fond du coffret (30), pour former un angle déterminé avec la paroi du coffret (30) la plus proche du fond (4) du caisson. Cet angle est déterminé pour que le premier miroir (110) dévie les rayons lumineux vers le deuxième miroir (112) en traversant l'objectif (114).

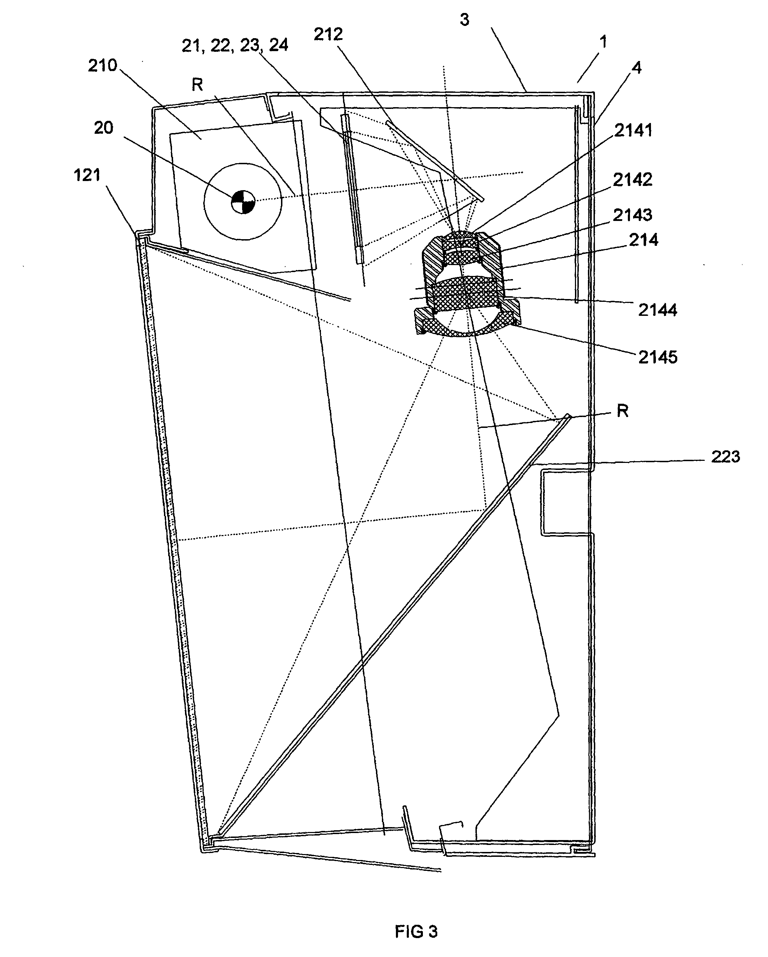

La figure 3 représente une vue de côté d'une deuxième variante du dispositif selon l'invention lorsqu'il est monté sur un caisson. Dans cette deuxième variante, la géométrie du caisson reste inchangée. De même, la constitution des moyens (210, 212, 214, 223) de projection d'image et des moyens (20 à 24) ne change pas. Par contre, la disposition des différents moyens les uns vis-à-vis des autres est modifiée. Dans cette variante de réalisation, la source (non représentée) est située dans la partie supérieure de la structure (10) auto-porteuse et entre l'écran (121) et l'ouverture du caisson (1). La direction de l'axe optique de la source est sensiblement identique à celui de la première variante. L'axe optique des moyens (21 à 24) de création de l'image est sensiblement perpendiculaire à l'écran (121). Un premier miroir (210) est placé entre la source (20) et les moyens (21 à 24) de création de l'image et fait un angle déterminé avec le fond (4) du caisson pour dévier le faisceau (R) vers les moyens (21 à 24) sensiblement dans un plan horizontal. Un deuxième miroir (212) est placé entre les moyens (21 à 24) de création de l'image et l'objectif (214) et fait un angle déterminé avec le fond (4) du caisson pour dévier le faisceau (R) vers un troisième miroir (223) en traversant l'objectif (214). Le troisième miroir (223) fait un angle déterminé avec l'écran (121) pour dévier le faisceau (R) lumineux vers ce dernier et est, par exemple, de forme trapézoïdale. Dans cette variante, le chemin optique compris entre le premier miroir et l'écran (121) est également compris dans un même plan perpendiculaire à l'écran (121) et au dessus (3) du caisson (1). L'axe de l'objectif (214) est compris dans un plan sensiblement vertical. Cette disposition particulière permet de diminuer le nombre de réflexions en aval de l'objectif (214), ce qui améliore la qualité de l'image sur l'écran (212). Les caractéristiques optiques de l'objectif (214) sont choisies pour que la longueur du chemin optique entre les moyens (21 à 24) de création de l'image et la première lentille (2141) de l'objectif (214) représente environ une fois et demie la distance focale de l'objectif. Cette caractéristique particulière permet de mettre en place le deuxième miroir (212) entre les moyens de création (21 à 24) de l'image et l'objectif (214) afin de réduire l'encombrement du dispositif selon l'invention tout en conservant une netteté satisfaisante de l'image projetée sur l'écran (121).

L'objectif utilisé dans cette deuxième variante de réalisation est de type rétrofocus (en anglais « inverted telephoto »). Ce type d'objectif est décrit dans un ouvrage intitulé « Lens design », de Milton Laikin aux éditions Marcel Dekker, INC, New York. L'objectif (214) selon l'invention comprend, d'amont en aval du chemin optique, un groupe de lentilles (2141, 2142, 2143, 2144) convergent et une lentille (2145) divergente. Dans la deuxième variante de réalisation, le groupe de lentilles (2141, 2142, 2143, 2144) convergent comprend 4 lentilles. A titre d'exemple, la première lentille (2141) est un ménisque convergent, la deuxième lentille (2142) est biconcave divergente, la troisième lentille (2143) est biconvexe convergente et la quatrième lentille (2144) est plan-convexe convergente. La lentille (2145) divergente est un ménisque divergent. Les axe optiques des cinq lentilles (2141, 2142, 2143, 2144, 2145) sont confondus et correspondent à l'axe optique de l'objectif (214).

A titre d'exemple, lorsque les moyens (21 à 24) de création de l'image comprennent un écran (23) à cristaux liquides dont la largeur est de l'ordre de 9cm et la longueur de l'ordre de 13cm, la distance focale de l'objectif est comprise entre 70 et 85mm et choisie égale à 78mm et la longueur du chemin optique entre les moyens (21 à 24) de création de l'image et la première lentille (2141) est comprise entre 105 et 130mm et choisie égale à 116mm. Cependant, la distance focale est déterminée en fonction des dimensions de l'écran (23) à cristaux liquides et de l'écran (121) de projection.

Dans une variante de réalisation, les verres utilisés pour réaliser les lentilles (2141, 2142, 2143, 2144, 2145) de l'objectif (214) sont fournis par la société SHOTT. Le verre choisi pour réaliser la première lentille (2141) est vendu sous la référence SK5. Le verre choisi pour réaliser la deuxième lentille (2142) est vendu sous la référence F5. Le verre choisi pour réaliser la troisième lentille (2143) est vendu sous la référence SF1. Le verre choisi pour réaliser la quatrième lentille (2144) est vendu sous la référence BK7. Le verre choisi pour réaliser la cinquième lentille (2145) est vendu sous la référence SK16.

Avantageusement, tout ou partie des miroirs (110, 112, 123) utilisés dans le dispositif sont, soit des miroirs plans, soit des miroirs cylindriques.

Ainsi, il apparaît que le dispositif selon l'invention est une structure monobloc et autoporteuse capable de s'adapter sur un caisson de volume réduit, mais également sans augmenter considérablement le volume total du caisson. De plus, tous les éléments du système optique permettant d'une part de créer une image ou une animation puis de projeter cette image ou animation sur un écran sont montés de façon à éviter tout réglage après la mise en place du dispositif selon l'invention dans le caisson. Cette caractéristique simplifie considérablement l'installation d'un tel système qui nécessite habituellement un soin particulier pour le réglage des divers éléments du système. Ensuite, compte tenu des dimensions possibles de l'écran et de l'image créée par le dispositif de génération d'images, il est possible d'obtenir par l'intermédiaire du dispositif selon l'invention, un agrandissement de l'image créée au moins égale à 6. De plus, lorsque le caisson (1) est suffisamment long, il est possible d'envisager l'installation de plusieurs dispositifs optiques (moyens de création et de projection d'une image) tels que décrit précédemment. Ainsi, une image de grande largeur, formée par la projection côte à côte des images produites par chaque dispositif optique, peut être crée en disposant les dispositifs optiques côte à côte dans le caisson (1).

Enfin, on conçoit aisément que le système selon l'invention permette de réduire les coûts d'installation d'un système de rétroprojection, puisque selon l'invention le dispositif est adaptable à un caisson existant, et ne nécessite donc pas de transformations importantes de celui-ci.

Il est clair que d'autres modifications à la portée de l'homme du métier entrent dans le cadre de l'invention

## Revendications

1. Dispositif d'affichage par rétroprojection, comprenant des moyens (20, 21, 22, 23, 24) de création d'une image, des moyens (110, 112, 114, 123, 210, 212, 214, 223) de projection de cette image sur un écran (121) de dimensions déterminées, ces moyens (110, 112, 114, 123, 210, 212, 214, 223) de projection comprenant une pluralité de miroirs (110, 112, 123, 210, 212, 223), **caractérisé en ce que** les moyens (20, 21, 22, 23, 24) de création de l'image, les moyens (110, 112, 114, 123) de projection sur l'écran et l'écran (121) sont disposés dans une structure (10) auto-porteuse de volume déterminé par le volume d'un caisson (1) sur lequel est montée la structure par l'intermédiaire de moyens de fixation (125, 126), ces moyens de fixation étant indépendants du réglage ou des positions relatives des éléments portés par cette structure (10).

2. Dispositif d'affichage par rétroprojection selon la revendication 1, **caractérisé en ce que** le chemin optique compris entre le premier miroir (110) et l'écran (121) est compris dans un plan perpendiculaire à cet écran (121) et au dessus (3) du caisson.

3. Dispositif d'affichage par rétroprojection selon l'une des revendications 1 à 2, **caractérisé en ce que** les deux derniers miroirs (112, 123) en aval de l'écran (121) sur le chemin optique de projection sont positionnés dans des plans dont l'intersection avec le plan de l'écran forment deux droites parallèles entre elles.

4. Dispositif d'affichage par rétroprojection selon l'une des revendications 1 à 3, **caractérisé en ce que** les moyens (20, 21, 22, 23, 24) de création d'une image et les moyens (110, 112, 114, 123) de projection de cette image comprennent d'amont en aval, une source lumineuse (20), des moyens (21, 22) d'éclairage homogène d'un dispositif (23) de génération d'images, l'axe optique de la source étant parallèle la fois au plan correspondant au dessus (3) du caisson (1), et au plan correspondant à l'arrière (4) du caisson (1), les moyens (110, 112, 123, 114) de projection de l'image comprennent, un objectif (114) à courte focale, et au moins trois miroirs (110, 112, 123), dont un premier miroir (110) est disposé entre les moyens (20, 21, 22, 23, 24) de création d'image et l'objectif (114) pour dévier, orthogonalement et dans le plan horizontal, les rayons lumineux sur un deuxième miroir (112) disposé en aval de l'objectif (114) et à une distance déterminée de celui-ci, ce deuxième miroir (112) déviant les rayons lumineux vers l'arrière (4) du caisson (1) sur un troisième miroir (123) qui dévie les rayons lumineux vers l'écran (121), l'axe optique de l'objectif (114) étant contenu dans un plan horizontal et le chemin optique compris entre le premier miroir (110) et l'écran (121) étant contenu dans un même plan perpendiculaire à l'écran (121) et au dessus (3) du caisson (1).

5. Dispositif d'affichage par rétroprojection selon la revendication 1, **caractérisé en ce que** les moyens (20, 21, 22, 23, 24) de création d'une image et les moyens (210, 212, 214, 223) de projection de cette image comprennent d'amont en aval, une source lumineuse (20), des moyens (21, 22) d'éclairage homogène d'un dispositif (23) de génération d'images, l'axe optique de la source étant contenu dans un plan parallèle, à la fois au plan correspondant au dessus (3) du caisson (1), et au plan correspondant à l'arrière (4) du caisson (1), les moyens (210, 212, 214, 223) de projection de l'image comprennent un objectif (214) de type rétrofocus et au moins trois miroirs (210, 212, 223), dont un premier miroir (210) est disposé entre la source et les moyens (20, 21, 22, 23, 24) de création d'image pour dévier, orthogonalement et dans le plan horizontal, les rayons lumineux sur un deuxième miroir (212) disposé en aval des moyens (20, 21, 22, 23, 24) de création d'image, ce deuxième miroir (212) déviant les rayons lumineux dans un plan sensiblement vertical, au travers le l'objectif (214) sur un troisième miroir (223) qui dévie les rayons lumineux vers l'écran (121), l'axe optique de l'objectif étant contenu dans un plan vertical et le chemin optique compris entre le premier miroir (210) et l'écran étant contenu dans un même plan, perpendiculaire à l'écran (121) et au-dessus (3) du caisson (1).

6. Dispositif d'affichage par rétroprojection selon la revendication 4 ou 5, **caractérisé en ce que** le dispositif (23, 24) de génération d'images comprend un écran (23) à cristaux liquides à matrice active.

7. Dispositif d'affichage par rétroprojection selon la revendication 4, **caractérisé en ce que** l'objectif est de type rétrofocus comprenant un groupe convergent de quatre lentilles (2141, 2142, 2143, 2143) et une cinquième lentille (2145) divergente, les axes optiques des cinq lentilles (2141, 2142, 2143, 2144, 2145) étant confondus et la distance focale de l'objectif étant déterminée pour que la longueur du chemin optique entre la première lentille (2141) et le dispositif de génération (23, 24) d'image soit de l'ordre de 1,5 fois la distance focale.

8. Dispositif d'affichage par rétroprojection selon l'une des revendications 1 à 7, **caractérisé en ce que** les moyens (21 à 24) de création de l'image comprennent un système (21) de condenseur des faisceaux lumineux comprenant une lentille de Fresnel.

9. Dispositif d'affichage par rétroprojection selon l'une des revendications 1 à 8, **caractérisé en ce que** les dimensions de l'image créée par le dispositif (23) de génération de l'image sont comprises entre 9cm et 10cm de large et 13cm et 15cm de longueur.

10. Dispositif d'affichage par rétroprojection selon l'une des revendications 1 à 9, **caractérisé en ce que** le caisson (1) sur lequel est montée la structure (10) auto-porteuse est, soit une structure existante, soit une structure spécialement aménagée pour le dispositif selon l'invention.

11. Dispositif d'affichage par rétroprojection selon l'une des revendications 1 à 10, **caractérisé en ce que** le rapport d'agrandissement de l'image générée par rapport à l'image projetée est d'au moins 6.

12. Dispositif d'affichage par rétroprojection selon l'une des revendications 1 à 11, **caractérisé en ce que** la surface de l'écran est dépolie et ses dimensions sont sensiblement de 80 cm de longueur et 60 cm de largeur.

13. Dispositif d'affichage par rétroprojection selon l'une des revendications 1 à 12, **caractérisé en ce que** l'écran est situé à une distance maximale de la face avant du caisson comprise entre 10 et 25 cm.

14. Dispositif d'affichage par rétroprojection selon l'une des revendications 1 à 13, **caractérisé en ce que** la forme de chaque miroir est, soit plane, soit cylindrique.

15. Dispositif d'affichage par rétroprojection selon l'une des revendications 1 à 14, **caractérisé en ce que** le volume du caisson (1) est sensiblement un parallélépipède à base trapèze rectangle, les dimensions du trapèze rectangle étant comprises, pour la petite base (2) entre 10 et 20 cm, pour la grande base (3) entre 20 et 30cm, et pour le côté (4) perpendiculaire à la petite (2) et grande base (3) entre 60 et 70cm, la longueur du caisson (1) étant égale à au moins 75 cm.

## Claims

1. Overhead projection display device, comprising means (20, 21, 22, 23, 24) for creating an image, means (110, 112, 114, 123, 210, 212, 214, 223) for projecting that image on a screen (121) of predetermined dimensions, these projection means (110, 112, 114, 123, 210, 212, 214, 223) comprising a plurality of mirrors (110, 112, 123, 210, 212, 223), **characterised in that** the image creation means (20, 21, 22, 23, 24), the means (110, 112, 114, 123) for projecting on a screen and the screen (121) are arranged in a free-standing structure (10) of a volume determined by the volume of a housing (1) on which the structure is mounted via fixing means (125, 126), these fixing means being independent of the adjustment or the relative positions of the members carried by this structure (10).

2. Overhead projection display device according to Claim 1, **characterised in that** the optical path between the first mirror (110) and the screen (121) is comprised within a plane perpendicular to that screen (121) and on top (3) of the housing.

3. Overhead projection display device according to one of Claims 1 to 2, **characterised in that** the two last mirrors (112, 123) downstream from the screen (121) on the optical projection path are positioned in planes, the intersection of which with the plane of the screen form two straight lines parallel to each other.

4. Overhead projection display device according to one of Claims 1 to 3, **characterised in that** the image creation means (20, 21, 22, 23, 24) and the means (110, 112, 114, 123) for projecting that image comprise, from upstream to downstream, a light source (20), means (21, 22) for the homogeneous illumination of an image generation device (23), the optical axis of the source being parallel both to the plane corresponding to the top (3) of the housing (1), and to the plane corresponding to the rear (4) of the housing (1), the image projection means (110, 112, 123, 114) comprise a short-focus objective (114), and at least three mirrors (110, 112, 123), of which a first mirror (110) is arranged between the image creation means (20, 21, 22, 23, 24) and the objective (114) so as to deflect the light rays, orthogonally and in the horizontal plane, to a second mirror (112) arranged downstream from the objective (114) and at a predetermined distance therefrom, this second mirror (112) deflecting the light rays towards the rear (4) of the housing (1) to a third mirror (123), which deflects the light rays towards the screen (121), the optical axis of the objective (114) being contained within a horizontal plane and the optical path between the first mirror (110) and the screen (121) being contained within one and the same plane perpendicular to the screen (121) and on top (3) of the housing (1).

5. Overhead projection display device according to Claim 1, **characterised in that** the image creation means (20, 21, 22, 23, 24) and the means (210, 212, 214, 223) for projecting that image comprise, from upstream to downstream, a light source (20), means (21, 22) for the homogeneous illumination of an image generation device (23), the optical axis of the source being contained within a plane that is parallel both to the plane corresponding to the top (3) of the housing (1), and to the plane corresponding to the rear (4) of the housing (1), the image projection means (210, 212, 214, 223) comprise an objective (214) of the retrofocus type and at least three mirrors (210, 212, 223), of which a first mirror (210) is arranged between the source and the image creation means (20, 21, 22, 23, 24) so as to deflect the light rays, orthogonally and in the horizontal plane, to a second mirror (212) arranged downstream from the image creation means (20, 21, 22, 23, 24), this second mirror (212) deflecting the light rays in a substantially vertical plane through the objective (214) to a third mirror (223), which deflects the light rays towards the screen (121), the optical axis of the camera lens being contained within a vertical plane and the optical path between the first mirror (210) and the screen being contained within one and the same plane, perpendicular to the screen (121) and on top (3) of the housing (1).

6. Overhead projection display device according to Claim 4 or 5, **characterised in that** the image generation device (23, 24) comprises an active-matrix liquid crystal screen (23).

7. Overhead projection display device according to Claim 4, **characterised in that** the objective is of the retrofocus type comprising a converging group of four lenses (2141, 2142, 2143, 2144) and a fifth, diverging lens (2145), the optical axes of the five lenses (2141, 2142, 2143, 2144, 2145) being merged and the focal distance of the objective being determined such that the length of the optical path between the first lens (2141) and the image generation device (23, 24) is of the order of 1.5 times the focal distance.

8. Overhead projection display device according to one of Claims 1 to 7, **characterised in that** the image creation means (21 to 24) comprise a light beam condenser system (21) comprising a Fresnel lens.

9. Overhead projection display device according to one of Claims 1 to 8, **characterised in that** the dimensions of the image created by the image generation device (23) are between 9 cm and 10 cm wide and 13 cm and 15 cm long.

10. Overhead projection display device according to one of Claims 1 to 9, **characterised in that** the housing (1) on which the free-standing structure (10) is mounted is either an existing structure or a structure specially designed for the device according to the invention.

11. Overhead projection display device according to one of Claims 1 to 10, **characterised in that** the magnification ratio of the generated image relative to the projected image is at least 6.

12. Overhead projection display device according to one of Claims 1 to 11, **characterised in that** the surface of the screen is frosted and its dimensions are substantially 80 cm long by 60 cm wide.

13. Overhead projection display device according to one of Claims 1 to 12, **characterised in that** the screen is located at a maximum distance from the front face of the housing comprised between 10 and 25 cm.

14. Overhead projection display device according to one of Claims 1 to 13, **characterised in that** the shape of each mirror is either flat or cylindrical.

15. Overhead projection display device according to one of Claims 1 to 14, **characterised in that** the volume of the housing (1) is substantially a parallelepiped with a rectangular trapezoid base, the dimensions of the rectangular trapezium being between 10 and 20 cm for the small base (2), between 20 and 30 cm for the large base (3) and between 60 and 70 cm for the side (4) perpendicular to the small (2) and large (3) base, the length of the housing (1) being equal to at least 75 cm.

## Patentansprüche

1. Rückprojektions-Anzeigevorrichtung, mit Mitteln (20, 21, 22, 23, 24) für die Erzeugung eines Bildes und Mitteln (110, 112, 114, 123, 210, 212, 214, 223) für die Projektion dieses Bildes auf einen Schirm (121) mit bestimmten Abmessungen, wobei diese Projektionsmittel (110, 112, 114, 123, 210, 212, 214, 223) mehrere Spiegel (110, 112, 123, 210, 212, 223) umfassen, **dadurch gekennzeichnet, daß** die Bilderzeugungsmittel (20, 21, 22, 23, 24), die Mittel (110, 112, 114, 123) für die Projektion auf den Schirm und der Schirm (121) in einer selbsttragenden Struktur (10) mit einem durch das Volumen eines Kastens (10) bestimmten Volumen angeordnet sind, wobei die Struktur auf dem Kasten (1) über Befestigungsmittel (125, 126) angebracht ist, die von der Einstellung oder den relativen Positionen der von dieser Struktur (10) getragenen Elemente unabhängig sind.

2. Rückprojektions-Anzeigevorrichtung nach Anspruch 1, **dadurch gekennzeichnet, daß** der zwischen dem ersten Spiegel (110) und dem Schirm (121) enthaltene optische Weg in einer Ebene enthalten ist, die zu diesem Schirm (121) senkrecht ist und sich auf der Oberseite (3) des Kastens befindet.

3. Rückprojektions-Anzeigevorrichtung nach einem der Ansprüche 1 bis 2, **dadurch gekennzeichnet, daß** die beiden letzten Spiegel (112, 123), die sich auf dem optischen Projektionsweg hinter dem Schirm (121) befinden, in Ebenen positioniert sind, deren Schnittlinien mit der Ebene des Schirms zwei zueinander parallele Geraden bilden.

4. Rückprojektions-Anzeigevorrichtung nach einem der Ansprüche 1 bis 3, **dadurch gekennzeichnet, daß** die Bilderzeugungsmittel (20, 21, 22, 23, 24) und die Mittel (110, 112, 114, 123) für die Projektion dieses Bildes von vorn nach hinten eine Lichtquelle (20) und Mittel (21, 22) für die homogene Beleuchtung einer Bilderzeugungsvorrichtung (23) umfassen, wobei die optische Achse der Quelle sowohl zu der der Oberseite (3) des Kastens (1) entsprechenden Ebene als auch zu der der Rückseite (4) des Kastens (1) entsprechenden Ebene parallel ist, wobei die Mittel (110, 112, 123, 114) für die Projektion eines Bildes ein Objektiv (114) mit kurzer Brennweite und wenigstens drei Spiegel (110, 112, 123) umfassen, wovon ein erster Spiegel (110) zwischen den Bilderzeugungsmitteln (20, 21, 22, 23, 24) und dem Objektiv (114) angeordnet ist, um die Lichtstrahlen senkrecht und in der horizontalen Ebene zu einem zweiten Spiegel (112) abzulenken, der hinter dem Objektiv (114) in einem bestimmten Abstand von diesem angeordnet ist, wobei dieser zweite Spiegel (112) die Lichtstrahlen zur Rückseite (4) des Kastens (1) zu einem dritten Spiegel (123) ablenkt, der seinerseits die Lichtstrahlen zum Schirm (121) ablenkt, wobei die optische Achse des Objektivs (114) in einer horizontalen Ebene enthalten ist und der optische Weg zwischen dem ersten Spiegel (110) und dem Schirm (121) in derselben Ebene senkrecht zum Schirm (121) und zur Oberseite (3) des Kastens (1) enthalten ist.

5. Rückprojektions-Anzeigevorrichtung nach Anspruch 1, **dadurch gekennzeichnet, daß** die Bilderzeugungsmittel (20, 21, 22, 23, 24) und die Mittel (210, 212, 214, 223) für die Projektion dieses Bildes von vorn nach hinten eine Lichtquelle (20) und Mittel (21, 22) fiir die homogene Beleuchtung einer Bilderzeugungsvorrichtung (23) umfassen, wobei die optische Achse der Quelle in einer Ebene enthalten ist, die sowohl zu der der Oberseite (3) des Kastens (1) entsprechenden Ebene als auch zu der der Rückseite (4) des Kastens (1) entsprechenden Ebene parallel ist, wobei die Bildprojektionsmittel (210, 212, 214, 223) ein Objektiv (214) des retrofokalen Typs und wenigstens drei Spiegel (210, 212, 223) umfassen, wovon ein erster Spiegel (210) zwischen der Quelle und den Bilderzeugungsmitteln (20, 21, 22, 23, 24) angeordnet ist, um die Lichtstrahlen senkrecht und in der horizontalen Ebene zu einem zweiten Spiegel (212) abzulenken, der hinter den Bilderzeugungsmitteln (20, 21, 22, 23, 24) angeordnet ist, wobei dieser zweite Spiegel (212) die Lichtstrahlen in einer im wesentlichen vertikalen Ebene durch das Objektiv (214) zu einem dritten Spiegel (223) ablenkt, der seinerseits die Lichtstrahlen zum Schirm (121) ablenkt, wobei die optische Achse des Objektivs in einer vertikalen Ebene enthalten ist und der optische Weg zwischen dem ersten Spiegel (210) und dem Schirm in derselben Ebene senkrecht zum Schirm (121) und zur Oberseite (3) des Kastens (3) enthalten ist.

6. Rückprojektions-Anzeigevorrichtung nach Anspruch 4 oder 5, **dadurch gekennzeichnet, daß** die Bilderzeugungsvorrichtung (23, 24) einen Aktivmatrix-Flüssigkristallschirm (23) enthält.

7. Rückprojektions-Anzeigevorrichtung nach Anspruch 4, **dadurch gekennzeichnet, daß** das Objektiv vom retrofokalen Typ ist und eine Gruppe aus vier Sammellinsen (2141, 2142, 2143, 2144) sowie eine fünfte Streulinse (2145) umfaßt, wobei die optischen Achsen der fünf Linsen (2141, 2142, 2143, 2144, 2145) zusammenfallen und die Brennweite des Objektivs so bestimmt ist, daß die Länge des optischen Wegs zwischen der ersten Linse (2141) und der Bilderzeugungsvorrichtung (23, 24) in der Größenordnung der 1,5fachen Brennweite liegt.

8. Rückprojektions-Anzeigevorrichtung nach einem der Ansprüche 1 bis 7, **dadurch gekennzeichnet, daß** die Bilderzeugungsmittel (21 bis 24) ein Lichtstrahlenbündel-Kondensorsystem (21), das eine Fresnel-Linse enthält, umfassen.

9. Rückprojektions-Anzeigevorrichtung nach einem der Ansprüche 1 bis 8, **dadurch gekennzeichnet, daß** die Abmessungen des von der Bilderzeugungsvorrichtung (23) erzeugten Bildes eine Breite im Bereich von 9 cm bis 10 cm und eine Länge im Bereich von 13 cm bis 15 cm haben.

10. Rückprojektions-Anzeigevorrichtung nach einem der Ansprüche 1 bis 9, **dadurch gekennzeichnet, daß** der Kasten (1), auf dem die selbsttragende Struktur (10) montiert ist, entweder eine vorhandene Struktur oder eine für die Vorrichtung gemäß der Erfindung speziell angefertigte Struktur ist.

11. Rückprojektions-Anzeigevorrichtung nach einem der Ansprüche 1 bis 10, **dadurch gekennzeichnet, daß** das Verhältnis der Vergrößerung des erzeugten Bildes zu dem projizierten Bild wenigstens 6 ist.

12. Rückprojektions-Anzeigevorrichtung nach einem der Ansprüche 1 bis 11, **dadurch gekennzeichnet, daß** die Oberfläche des Schirms entspiegelt ist und seine Abmessungen eine Länge von im wesentlichen 80 cm und eine Breite von im wesentlichen 60 cm haben.

13. Rückprojektions-Anzeigevorrichtung nach einem der Ansprüche 1 bis 12, **dadurch gekennzeichnet, daß** sich der Schirm in einem maximalen Abstand von der Vorderseite des Kastens befindet, der im Bereich von 10 bis 25 cm liegt.

14. Rückprojektions-Anzeigevorrichtung nach einem der Ansprüche 1 bis 13, **dadurch gekennzeichnet, daß** die Form jedes Spiegels entweder eben oder zylindrisch ist.

15. Rückprojektions-Anzeigevorrichtung nach einem der Ansprüche 1 bis 14, **dadurch gekennzeichnet, daß** das Volumen des Kastens (1) im wesentlichen ein Parallelepiped auf der Basis eines rechtwinkligen Trapezes ist, wobei die Abmessungen des rechtwinkligen Trapezes für die kleine Basis (2) im Bereich von 10 bis 20 cm, für die große Basis (3) im Bereich von 20 bis 30 cm und für die zur kleinen Basis (2) und zur großen Basis (3) senkrechte Seite (4) im Bereich von 60 bis 70 cm liegen, wobei die Länge des Kastens (1) wenigstens gleich 75 cm ist.
